# EUROPEAN PATENT SPECIFICATION

(11) **EP 1 239 142 B1**
(45) Date of publication and mention of the grant of the patent: **09.07.2008**
(21) Application number: 02005037.3
(22) Date of filing: 06.03.2002
(51) Int. Cl.: F02M 25/07

(54) **Abnormality detection apparatus for an exhaust gas recircultation apparatus**
Fehlererkennungsgerät für eine Abgasrückführungsvorrichtung
Appareil de détection d'anomalies pour un appareil de recirculation de gaz d'échappement

(30) Priority: 07.03.2001 JP 2001062917
(43) Date of publication of application: 11.09.2002
(73) Proprietor: Toyota Jidosha Kabushiki Kaisha, Toyota-shi, Aichi-ken, 471-8571 (JP)
(72) Inventor: Morikawa, Atsushi, Toyota-shi, Aichi-ken 471-8571 (JP)
(74) Representative: TBK-Patent

(56) References cited:
- US-A- 5 201 303
- US-A- 5 653 212
- PATENT ABSTRACTS OF JAPAN vol. 1996, no. 08, 30 August 1996 (1996-08-30) & JP 8 086248 A (NISSAN MOTOR CO LTD), 2 April 1996 (1996-04-02)

## Description

The present invention relates to an abnormality detection apparatus that detects whether abnormalities exist in an exhaust gas recirculation apparatus provided in an internal combustion engine.

In the prior art, there is a known vehicle-mounted engine that is provided with an exhaust gas recirculation (EGR) apparatus for recirculating a portion of exhaust gas in an intake passage in order to improve exhaust gas emissions. An EGR apparatus has an EGR passage, which connects an intake passage with an exhaust passage of the engine, and an EGR valve, which is arranged in the EGR passage. By adjusting the opening degree of the EGR valve, the EGR apparatus adjusts the amount of exhaust gas (EGR amount) recirculated from the exhaust passage to the intake passage via the EGR passage. When a portion of the exhaust gas is returned to the intake passage, the combustion temperature inside the combustion chamber is lowered by the returned exhaust gas and the generation of nitrogen oxides (NOx) is suppressed, thus improving the exhaust emissions.

If an abnormality occurs in the EGR apparatus, the exhaust emissions deteriorate. For example, if the movement of the EGR valve becomes slow, or if the EGR valve becomes stuck and does not function, or if the EGR passage becomes clogged by foreign matter or carbides in the exhaust gas, the EGR amount deviates from a target value, which is set at an optimal value in accordance with the operation state of the engine. In this case, the combustion state deteriorates and NOx generation increases. Therefore, an apparatus for detecting an abnormality in the EGR apparatus has been proposed.

A conventional abnormality detection apparatus is disclosed in US-5 653 212 as well as in Japanese Patent Laid-Open Publication No. 8-86248. When the condition for executing idle speed control and the condition for starting self diagnosis are both met, the abnormality detection apparatus controls the EGR valve such that the actual EGR opening degree matches the target EGR opening degree. In addition, the abnormality detection apparatus controls the duty ratio of the idle speed control signals (ISC ratio) such that the engine speed matches the target engine speed. When the engine speed matches the target engine speed, the abnormality detection apparatus determines the deviation between the current value of the ISC ratio and the target value. Using this deviation, the abnormality detection apparatus then determines a corrected target opening degree for the EGR valve 34 from an EGR target opening degree correction table. If the corrected target opening degree exceeds a threshold value over a predetermined reference time, the abnormality detection apparatus determines that the EGR apparatus is abnormal.

However, in a conventional abnormality detection apparatus, the various processings for abnormality detection are performed when the engine is idling and the EGR valve is controlled. Therefore, even if an abnormality occurs in the EGR apparatus, the detection of the abnormality is limited to the period when the engine is idling (i.e., limited to the idle range). EGR abnormality is not detected if the engine does not perform EGR in the idle range. Thus, the application of the abnormality detection apparatus is limited to an engine having an EGR apparatus that also performs EGR in the idle range.

It is an object of the present invention to provide an abnormality detection apparatus for an exhaust gas recirculation apparatus that is capable, regardless of the running state of the engine, of detecting an abnormality in an exhaust gas recirculation apparatus when exhaust gas recirculation is being performed.

To achieve the above object, the present invention provides a detection apparatus for detecting an abnormality in an exhaust gas recirculation apparatus. The exhaust gas recirculation apparatus includes an exhaust gas recirculation passage that connects an intake passage to an exhaust passage downstream from a throttle valve in order to recirculate exhaust gas of an internal combustion engine to the intake passage, and an exhaust gas recirculation valve for altering a recirculation amount of the exhaust gas flowing through the exhaust gas recirculation passage. The detection apparatus includes an intake air amount detection apparatus for detecting an amount of intake air flowing through the intake passage, and a control apparatus for performing feedback control on the exhaust gas recirculation valve such that the intake air amount matches a target intake air amount that corresponds to a running state of the internal combustion engine. The control apparatus alters an opening degree of the throttle valve when a feedback term of the feedback control is outside a predetermined range, and after the opening degree of the throttle valve has been altered by a predetermined amount, determines that the exhaust gas recirculation apparatus is abnormal when a change in the feedback term is less than or equal to a predetermined value.

A further perspective of the present invention is a method for detecting an abnormality in an exhaust gas recirculation apparatus. The exhaust gas recirculation apparatus includes an exhaust gas recirculation passage that connects an intake passage to an exhaust passage downstream from a throttle valve in order to recirculate exhaust gas from an internal combustion engine of a vehicle to the intake passage, and an exhaust gas recirculation valve for altering a recirculation amount of exhaust gas flowing through the exhaust gas recirculation passage. The method includes detecting an amount of intake air flowing through the intake passage, feedback controlling the exhaust gas recirculation valve such that the intake air amount matches a target intake air amount that corresponds to a running state of the internal combustion engine, altering an opening degree of the throttle valve when a feedback term of the feedback control is outside a predetermined range at least when the vehicle is traveling normally, and determining that the exhaust gas recirculation apparatus is abnormal when a change in the feedback term is less than or equal to a predetermined value after the opening degree of the throttle valve is altered.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic view of an abnormality detection apparatus for an EGR apparatus according to a preferred embodiment of the present invention;
Figs. 2 and 3 are flow charts showing an abnormality detection routine executed by the abnormality detection apparatus of Fig. 1; and
Fig. 4 is a graph showing the relationship between a throttle opening degree coefficient and an intake air amount.

An abnormality detection apparatus of an exhaust gas recirculation apparatus according to a preferred embodiment of the present invention will now be described with reference to the drawings.

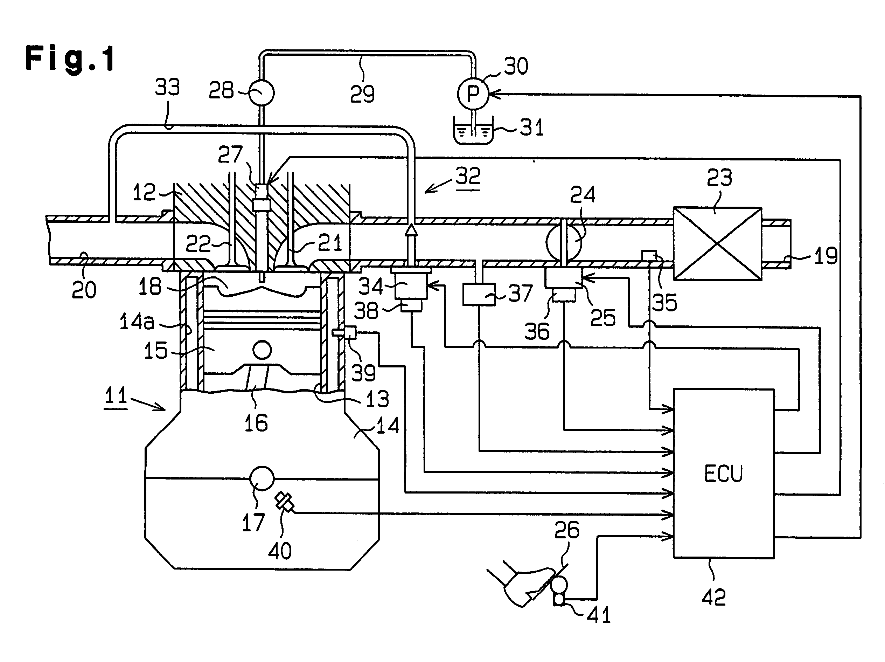

Fig. 1 shows a diesel engine 11 mounted in a vehicle and an exhaust gas recirculation (EGR) apparatus 32 provided in the engine 11. The engine 11 has a cylinder head 12 and a cylinder block 14 having a plurality of cylinders 13. A piston 15 reciprocates in each cylinder 13. Each piston 15 is connected via a connecting rod 16 to an output shaft, or a crankshaft 17 of the engine 11. The connecting rod 16 converts the reciprocation of each piston 15 to the rotation of the crankshaft 17.

A combustion chamber 18 is defined in each cylinder 13. The combustion chamber 18 is connected to the intake passage 19 and the exhaust passage 20. Each cylinder 13 is provided with an intake valve 21 and an exhaust valve 22, which are arranged in the cylinder head 12. The intake valve 21 and the exhaust valve 22 are reciprocated in cooperation with the crankshaft 17 to open and close the combustion chamber 18.

An air cleaner 23 and a throttle valve 24 are arranged in the intake passage 19. In the intake stroke, the exhaust valve 22 is closed and the piston 15 is lowered while the intake valve 21 is opened. As a result, the pressure inside the combustion chamber 18 is reduced to a value lower than the pressure of the ambient air (i.e., to a negative pressure), and air from outside the engine 11 is drawn into the combustion chamber 18 through the intake passage 19.

The throttle valve 24 is rotatably supported inside the intake passage 19 and is driven by an actuator 25, such as a step motor. The amount of air that flows through the intake passage 19 (intake air amount) changes in accordance with a throttle opening degree coefficient that corresponds to the rotation angle of the throttle valve 24. The throttle opening degree coefficient is minimum (i.e., 0%) when the cross-sectional area of the intake passage 19 opened by the throttle valve 24 (opened area) is maximum, and maximum (i.e., 100%) when the opened area of the intake passage 19 is minimum.

A plurality of fuel injection valves 27, each of which injects fuel into an associated combustion chamber 18, are arranged on the cylinder head 12. Each fuel injection valve 27 has an electromagnetic valve (not shown). The electromagnetic valve controls the timing and amount of fuel injected into each combustion chamber 18 by associated fuel injection valve 27. Each fuel injection valve 27 is connected to a common pressure accumulation pipe, or common rail 28. When the electromagnetic valve is open, fuel inside the common rail 28 is injected from the fuel injection valve 27 into the corresponding combustion chamber 18. A supply pump 30 applies a relatively high pressure, which corresponds to the fuel injection pressure, to the common rail 28. More specifically, the supply pump 30 is connected to the common rail 28 by a feed pipe 29. The supply pump 30 draws in fuel from a fuel tank 31, pressurizes the fuel with a plunger (not shown), which reciprocates in synchronization with the rotation of the crankshaft 17 of the engine 11, and then sends the fuel to the common rail 28.

Each piston 15 compresses the intake air, which is drawn into the associated cylinder 13 via the intake passage 19, to a high temperature and high pressure. Fuel is then injected from the fuel injection valve 27. The heat of the intake air ignites and burns the injected fuel. This produces combustion gas, which reciprocates the piston 15, rotates the crankshaft 17, and generates power (output torque) of the engine 11. The combustion gas is discharged to the exhaust passage 20 as the exhaust valve 22 opens.

The EGR apparatus 32 recirculates a portion of the exhaust gas inside the exhaust passage 20 to the intake passage 19. The EGR apparatus 32 mixes the exhaust gas (EGR gas) with the intake air, thus increasing the ratio of inert gas in the air-fuel mixture. As a result, the maximum combustion temperature of the air-fuel mixture is lowered. This reduces the generation of air pollutants such as nitrogen oxide (NOx).

The EGR apparatus 32 includes an EGR passage 33 and an EGR valve 34. The EGR passage 33 connects the exhaust passage 20 to a return position defined in the intake passage 19, which is downstream from the throttle valve 24. The EGR valve 34 is located at the return position or in the EGR passage 33. The EGR valve 34 has a valve element that moves to alter the opening degree of the EGR passage 33. The flow velocity of the EGR gas in the EGR passage 33, or the EGR gas flow rate, changes in accordance with the opening degree of the EGR valve 34 (EGR opening degree coefficient). The EGR opening degree coefficient varies in accordance with the amount of movement of the valve element of the EGR valve 34. More specifically, the EGR opening degree coefficient is minimum (0%) when the EGR valve 34 is in a fully closed state and increases as the valve opens. When the EGR valve 34 is in a fully open state, the EGR opening degree coefficient is maximum (100%).

An air flow meter 35 for detecting the amount of intake air is located in the intake passage 19 downstream from and near the air cleaner 23. A throttle position sensor 36, which is attached the throttle valve 24, detects the rotation angle of the throttle valve 24, or the opening degree of the throttle valve 24 (the opening degree of the throttle valve 24 corresponds to the opened area of the intake passage 19). An intake air pressure sensor 37 located downstream from the throttle valve 24 in the intake passage 19 detects the intake air pressure. An EGR opening degree sensor 38 provided in the EGR valve 34 detects the opening degree of the EGR valve 34. A water temperature sensor 39 provided in the cylinder block 14 detects the temperature of cooling water inside a water jacket 14a. A crank position sensor 40 located in the vicinity of the crankshaft 17 outputs a pulse signal each time the crankshaft 17 rotates by a predetermined angle. The pulse signals are used to detect the number of revolutions per unit time of the crankshaft 17, or to detect the engine speed. An accelerator opening degree sensor 41 is arranged in the vicinity of an accelerator pedal 26 to detect the amount the accelerator pedal is depressed by the driver, or to detect the accelerator opening degree. The air flow meter 35, the throttle position sensor 36, the intake air pressure sensor 37, the EGR opening degree sensor 38, the water temperature sensor 39, the crank position sensor 40, and the accelerator opening degree sensor 41 detect the running state of the engine 11.

The sensors 35 to 41 send detection signals to an electronic control unit (ECU) 42. The ECU 42 is configured about a microcomputer. A central processing unit (CPU) performs calculations in accordance with a control map, initial data, and a control program stored in a read only memory (ROM) and controls the engine 11 based on the calculation results. The calculation results are temporarily stored in a random access memory (RAM).

The controls performed for the engine 11 include fuel injection control, throttle control, EGR control, and abnormality detection control of the EGR apparatus 32.

For example, the fuel injection control determines the amount of fuel injected from a fuel injection valve 27 and the timing for injecting the fuel. When determining the fuel injection amount, the ECU 42, for example, refers to a predetermined control map and calculates a basic fuel injection time, or a basic fuel injection amount, which corresponds to the engine speed and accelerator opening degree. The ECU 42 corrects the basic fuel injection time based on the cooling water temperature and the intake air amount and determines the final fuel injection time. When determining the fuel injection timing, the ECU 42, for example, refers to a predetermined control map and calculates a basic fuel injection timing. The ECU 42 corrects the basic fuel injection timing based on the cooling water temperature and the intake air amount and determines the final fuel injection timing. The ECU 42 begins to energize the fuel injection valve 27 when an output signal from the crank position sensor 40 matches the fuel injection initiation timing. The ECU 42 stops energizing the fuel injection valve 27 when the fuel injection time elapses from the initiation timing.

The throttle control, for example, calculates a target throttle opening degree coefficient corresponding to the engine revolution speed and the fuel injection amount. The ECU 42 drives the actuator 25 in accordance with the target throttle opening degree coefficient to match the actual throttle opening degree and the target throttle opening degree.

The EGR control determines whether conditions for execution of the EGR control are satisfied based on, for example, the engine speed, cooling water temperature, and accelerator opening degree. The EGR control execution conditions include, for example, the cooling water temperature being greater than or equal to a reference value, the engine 11 having been continuously run for a predetermined time after being started, and the amount of change in the accelerator opening degree being a positive value. If the EGR control execution conditions are not satisfied, the ECU 42 holds the EGR valve 34 in a fully closed state. If, however, the execution conditions are satisfied, while referring to a predetermined control map, the ECU 42 calculates a target opening degree coefficient for the EGR valve 34 that corresponds to the engine speed and fuel injection amount. The ECU 42 drives the EGR valve 34 based on this target opening degree coefficient.

The EGR control includes feedback control of the EGR opening degree using the intake air amount as a parameter. The feedback control is performed so that the actual intake air amount detected by the air flow meter 35 matches the target intake air amount corresponding to the running state of the engine 11. More specifically, the ECU 42 determines the final target EGR opening degree coefficient by adding the feedback (F/B) term to the target opening degree coefficient (base term) of the EGR valve 34. The ECU 42 controls the EGR valve 34 based on the final target EGR opening degree coefficient. The F/B term absorbs the effects on the intake air amount resulting from irregularities in the EGR valve 34 and air flow meter 35 as well as clogging of the EGR passage 33, and usually has a value of -20% to +20%.

In the EGR control feedback, if the actual intake air amount is less than the target intake air amount, the EGR valve 34 is closed by a predetermined amount. In this case, the EGR gas returning to the respective cylinders 13 decreases as the opened area of intake passage 19 is reduced. The amount of new gas drawn into each cylinder 13 increases by the same amount as the decrease in the EGR gas.

If, however, the actual intake air amount is greater than the target intake air amount, the EGR valve 34 is opened by a predetermined amount based on the EGR control feedback. In this case, the EGR gas returning to the respective cylinders 13 increases as the opened area of the intake passage 19 is increased. The amount of new gas taken into each cylinder 13 decreases by the same amount as the increase in the EGR gas.

If it is necessary to increase the amount of EGR gas but the EGR valve 34 is already in a fully open state, the ECU 42 drives the actuator 25 to close the throttle valve 24 by a predetermined amount. In this case, because the intake air pressure decreases in the intake passage 19 at positions downstream from the throttle valve 24, the amount of EGR gas drawn into the intake passage 19 from the EGR passage 33 relatively increases.

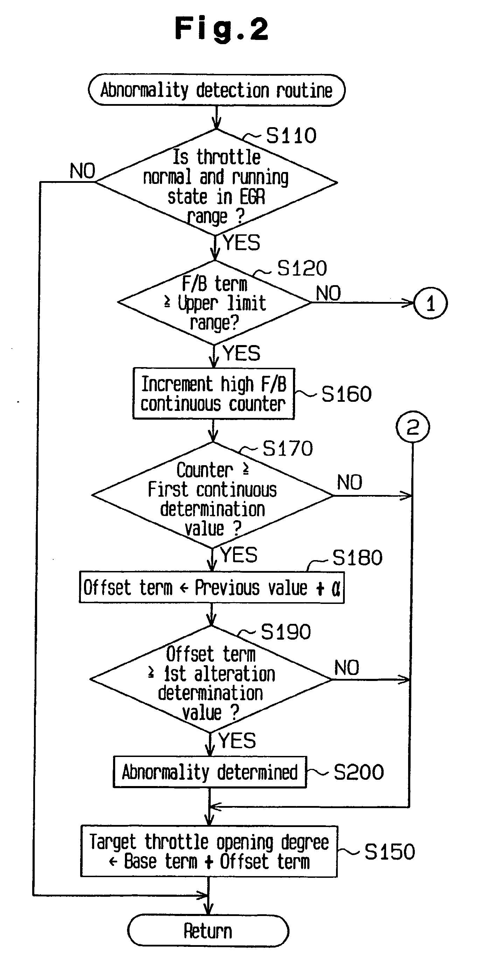

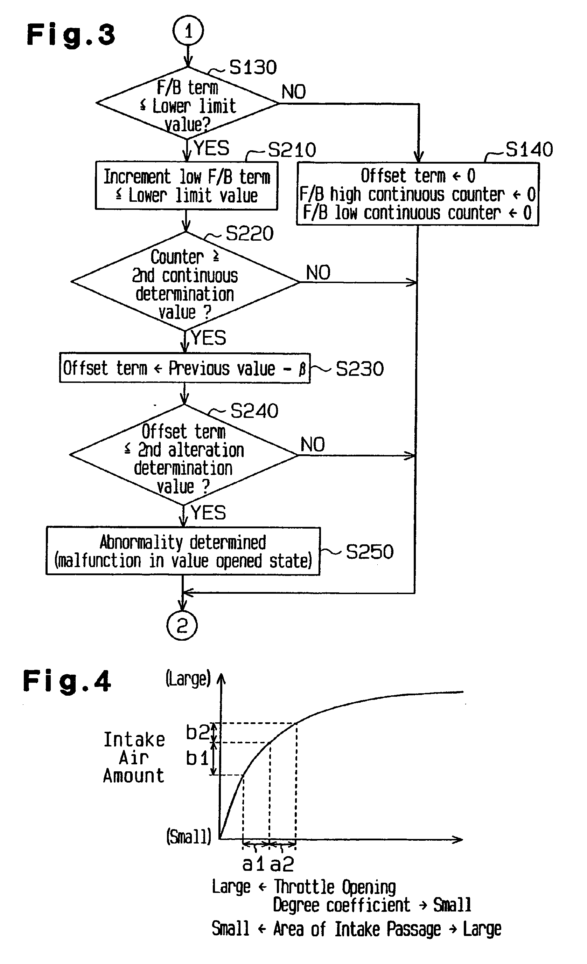

The abnormality detection control of the EGR apparatus 32 will now be described. The ECU 42 detects abnormalities in the EGR apparatus 32 by executing the abnormality detection routine shown in Figs. 2 and 3. The abnormality detection routine is executed repeatedly at predetermined intervals. In the abnormality detection routine, an abnormality in the EGR apparatus 32 is detected by examining changes in the F/B term in the feedback control of the EGR control. For example, if the throttle valve 24 is partly closed and the opening area of the intake passage 19 is reduced irrespectively of the running state of the engine 11, the actual intake air amount becomes less than the target intake air amount. At this time, the F/B term decreases so as to reduce the difference in the intake air amount. In contrast, if, for example, the throttle valve 24 is partly opened and the opened area of the intake passage 19 increases, the actual air intake amount becomes greater than the target intake air amount. At this time, the F/B term increases so as to absorb the difference in the intake air amount. The ECU 42 uses these changes in the F/B term to detect an abnormality in the EGR apparatus.

The abnormality detection routine will now be described in detail. Firstly, in step S110, the ECU 42 determines whether the control of the throttle valve 24 is proceeding normally. In step S110, the ECU 42 also determines whether the running state of the engine 11 meets the conditions for executing EGR control. When the control of the throttle valve 24 is proceeding normally and the running state of the engine 11 does meet the conditions for executing EGR control, the ECU 42 proceeds to step S120. In all other cases, the abnormality detection routine is ended.

In steps S120 and S130, the ECU 42 determines whether the F/B term is outside a predetermined range. The predetermined range is stored in the ROM and is greater than the normal range of the F/B term (i.e., -20% to +20%), for example, -50% to +50%. The upper limit value (+50%) and the lower limit value (-50%) of the predetermined range are values that the F/B term is not expected to reach even considering irregularities in the parts forming the EGR apparatus or in the environmental conditions. In other words, the predetermined range is set greater than a range containing the F/B term when the exhaust gas recirculation valve is normal.

In step S120, the ECU 42 determines whether the F/B term is greater than or equal to the upper limit value of the predetermined range. In step S130, the ECU 42 determines whether the F/B term is greater than or equal to the lower limit value of the predetermined range. If the result of the determination is NO in both step S120 and step S130, then, in step S140, an offset term, a high F/B continuous counter, and a low F/B continuous counter are initialized.

The offset term is used in a processing routine to forcibly alter the opening degree of the EGR valve 34 in order to detect an abnormality on the EGR apparatus 32. More specifically, the offset term is added to the base term (i.e., the target throttle opening degree coefficient) to update the target throttle opening degree coefficient. In step S140, the offset term is set to 0%. The high F/B continuous counter is the continuous time of the period when the F/B term is greater than or equal to the upper limit value. The low F/B continuous counter is the continuous time of the period when the F/B term is less than or equal to the lower limit value. In step S140, the high F/B continuous counter and the low F/B continuous counter are set to zero.

After the processing of step S140, in step S150, the ECU 42 updates the target throttle opening degree coefficient and ends the abnormality detection routine. The target throttle opening degree coefficient is updated by adding the offset term to the base term (the target throttle opening degree coefficient). The updated target throttle opening degree coefficient is used as a target value for throttle control in a separate routine (not shown). Namely, the ECU 42 drives the actuator 25 in accordance with the updated target throttle opening degree coefficient such that the actual throttle opening degree matches the target throttle opening degree.

If, however, the result of the determination in step S120 is YES, in step S160, the ECU 42 increments the high F/B continuous counter. In step S170, the ECU 42 determines whether the value of the high F/B continuous counter is greater than or equal to a first continuous determination value. The first continuous determination value is equivalent to 10 seconds, for example. If the result of the determination in step S170 is NO, the ECU 42 shifts to step S150.

If the period in which the F/B term is greater than or equal to the upper limit value continues for the first continuous determination value (i.e., 10 seconds), there is a high possibility that an abnormality has occurred in the EGR apparatus 32. Therefore, when the result of the determination in step S170 is YES, in step S180, the ECU 42 adds a predetermined addition value α to the offset term and updates the offset term. By increasing the offset term in step S180, the target throttle opening degree coefficient is set to a greater value in step S150, and the throttle valve 24 is closed by a predetermined amount.

The amount of alteration per unit time in the throttle opening degree coefficient is decided by the execution cycle of the abnormality detection routine and the addition value α. More specifically, the greater the addition value α, the greater the closure amount per unit time of the throttle valve 24. This will now be described with reference to Fig. 4. The graph in Fig. 4 shows the relationship between the intake air amount and the throttle opening degree coefficient together with the opening degree of the intake passage 19. The opening degree of the intake passage 19 is taken as A. If the throttle valve 24 is closed by the alteration amount a1 from the opening degree A, the intake air amount changes by the change amount b1. If, however, the throttle valve 24 is opened by the alteration amount a2 from the opening degree A, the intake air amount changes by the change amount b2. Clearly, the change amount b1 is greater than the change amount b2. In this way, the effect that the drive of the throttle valve 24 has on the change in the intake air amount differs in accordance with the drive direction (i.e., towards the opening side or towards the closing side) of the throttle valve 24. Consequently, if the drive amount per unit time of the throttle valve 24 is substantially uniform irrespectively of the drive direction, the intake air amount may change abruptly when the throttle valve 24 closes and abruptly change the output torque of the engine 11.

In the preferred embodiment, after considering the relationship between the throttle opening degree coefficient and the intake air amount, the addition value α for driving the throttle valve 24 towards the closing side is set to a relatively small value, for example, 1%. As a result, the intake air amount and the output torque from the engine 11 are prevented from changing abruptly.

Next, in step S190, the ECU 42 determines whether the offset term in step S180 is greater than or equal to the first alteration determination value. The first alteration determination value is read, for example, from a first control map (not shown) stored in ROM. The first control map indicates alteration determination values determined based on the engine speed and the fuel injection amount. The ECU 42 reads an alteration determination value corresponding to the engine speed and fuel injection amount from the first control map to set the first alteration determination value.

If the result of the determination in step S190 is NO, the ECU 42 proceeds to step S150. If the result of the determination in step S190 is YES, the ECU 42 proceeds to step S150 after performing step S200.

In step S200, the ECU 42 determines whether the EGR apparatus 32 is abnormal. Namely, if the increased offset term is greater than or equal to the first alteration determination value, the EGR apparatus 32 is determined to be abnormal. In other words, as long as the increased offset term is smaller than the first alteration determination value, the EGR apparatus 32 is not determined to be abnormal.

Thus, in the preferred embodiment, if the F/B term is greater than or equal to the upper limit value of a predetermined range, it is determined that there is a high possibility of the EGR control being abnormal. By increasing the offset term, the ECU 42 drives the throttle valve 24 towards the closing side irrespectively of the engine running state. As a result, the difference between the actual intake air amount and the target intake air amount increases. At this time, if the EGR opening angle is temporarily controlled normally, the F/B term that should absorb this difference is reduced. The throttle valve 24 is partially closed and the F/B term should become smaller than the upper limit value and fall within the predetermined range. If the F/B term nevertheless remains above the upper limit value, then it is considered that an abnormality is present in the EGR apparatus 32. Therefore, if the increased offset term is greater than or equal to the first alteration determination value as well as the F/B term being greater than or equal to the upper limit value of a predetermined range, the EGR apparatus 32 is determined to be abnormal.

If, however, the result of the determination in step S130 is YES, the ECU 42 increments the low F/B continuous counter in step S210. In step S220, the ECU 42 determines whether the value of the low F/B continuous counter is greater than or equal to a second continuous determination value. The second continuous determination value may be the same as or different from the first continuous determination value. If the result of the determination in step S220 is NO, the ECU 42 shifts to step S150.

If, however, the result of the determination in step S220 is YES, then, in step S230, the ECU 42 subtracts a predetermined subtraction value β from the offset term and updates the offset term. By subtracting the offset term, the target throttle opening degree coefficient of step S150 is reduced and the opened area of the intake passage 19 is increased

The larger the subtraction value β, the greater the opening amount per unit time of the throttle valve 24. In consideration of the relationship between the intake air amount and the throttle opening degree coefficient shown in Fig. 4, the subtraction value β is set to a larger value than the addition value α, for example, 5%. As a result, the amount of change in the intake air amount is approximately the same regardless of the drive direction of the throttle valve 24.

In step S240, the ECU 42 determines whether the updated offset term is less than or equal to a second alteration determination value. The second alteration determination value is read, for example, from a second control map (not shown) stored in ROM. The second control map indicates alteration determination values determined based on the engine speed and the fuel injection amount. The alteration determination values in the second control map are different from those in the first control map. The ECU 42 reads an alteration determination value from the second control map and sets this as the second alteration determination value.

If the result of the determination in step S240 is NO, the ECU 42 proceeds to step S150. If the result of the determination in step S240 is YES, the ECU 42 proceeds to step S250. In step S250, the ECU 42 determines that an abnormality has occurred in the EGR apparatus 32. This abnormality includes the EGR valve 34 being stuck in an open state or having a movement problem. In this way, an abnormality is determined at the point when the subtracted offset term falls to greater than or equal to the second alteration determination value. In other words, as long as the subtracted offset term remains above the second alteration determination value, no abnormality is determined.

In the preferred embodiment, if the F/B term is less than or equal to the lower limit value of a predetermined range, it is determined that there is a high possibility of the EGR opening degree being abnormal. By reducing the offset term, the ECU 42 drives the throttle valve 24 towards the opening side irrespectively of the engine running state. As a result of this control, the difference between the actual intake air amount and the target intake air amount increases. If the EGR opening degree is temporarily controlled normally, the F/B term that should absorb this difference is increased. The throttle valve 24 is partially opened and the F/B term should become greater than the lower limit value and fall within the predetermined range. If the F/B term nevertheless remains below the upper limit value, then it is considered that an abnormality is present in the EGR apparatus 32. Therefore, if the reduced offset term is less than or equal to the second alteration determination value as well as the F/B term being less than or equal to the lower limit value, the EGR apparatus 32 is determined to be abnormal.

In step S250, the ECU 42 determines that the abnormality in the EGR apparatus 32 is due to a problem occurring with the EGR valve 34 in an opened state. This is because the F/B term remains less than or equal to the lower limit value even when the throttle valve 24 is driven towards the opening side by a predetermined amount since the EGR amount remains in an excessive state and does not decrease. Such phenomenon occurs only when the EGR valve 34 remains opened, such as when it is stuck or when it cannot move.

The preferred embodiment has the following advantages.
(1) If the F/B term is outside a predetermined range that is greater than the normal range, there is a strong possibility that the EGR control is abnormal. In this case, the ECU 42 forcibly drives the throttle valve 24 and examines the change in the F/B term. If the amount of change in the F/B term is less than or equal to a predetermined value in spite of the throttle opening degree being altered, the ECU 42 determines that the EGR apparatus 32 is abnormal. Therefore, the abnormality in the EGR apparatus 32 is quickly detected.
(2) Feedback control of the EGR opening degree is performed when the running state of the engine 11 is in the range in which EGR control is performed. Therefore, an abnormality in the EGR apparatus 32 can be detected at any time while the engine 11 is in a running state in which EGR is executed. Accordingly, unlike the conventional technology, the abnormality detection apparatus can be applied to a type of EGR apparatus that does not perform EGR in the idle range.
(3) When the F/B term is inside the F/B range, the EGR opening degree is not forcibly altered in order to detect an abnormality. Therefore, the EGR opening degree is not altered when the possibility of the EGR apparatus 32 being abnormal is not particularly strong, thereby preventing the intake air amount from being changed unnecessarily.
(4) Because the throttle opening degree is altered in order to detect an abnormality, the intake air amount changes and the combustion state of the engine 11 changes. As a result, there is a concern that a change will occur in the combustion noise and in the output torque (minute shocks). Therefore, for example, by performing abnormality detection while a vehicle is traveling, changes in the combustion noise and shocks that accompany the driving of the throttle valve 24 go unnoticed by a vehicle occupant. This is because, while a vehicle is traveling, the effect on the generated torque of the pumping loss that accompanies a change in the throttle opening degree is small, and because the running noise prevents the combustion noise from being heard. Accordingly, the preferred embodiment is superior in comparison with the conventional technology in which abnormality detection is only performed while an engine is idling.
(5) The offset term is gradually increased (in step S180) by a relatively small (e.g., 1%) addition value α. Therefore, even if the throttle valve 24 is driven towards the closing side, abrupt changes in the intake air amount are suppressed. In addition, abrupt changes in the combustion state of the engine 11, namely, abrupt changes (i.e., shocks) in the output torque are suppressed. As a result, a vehicle occupant experiences no deterioration in the drivability of a vehicle.
(6) The subtraction value β is greater than the addition value α. Accordingly, the alteration amount per unit time in the offset term when the throttle valve 24 is driven to the opening side is relatively large. The throttle valve 24 is thus driven by a greater amount when opened than when closed. Therefore, although the relationship between the throttle opening degree coefficient and the intake air amount is as shown in Fig. 4, the amount of change in the intake air amount and the change in the state of combustion is kept substantially constant regardless of the direction in which the throttle valve 24 is driven.
(7) The first alteration determination value and the second alteration determination value differ in accordance with the engine speed and the fuel injection amount. Therefore, even if the characteristics of the intake air amount shown in Fig. 4 change in accordance with the running state of the engine, the first and second alteration determination values are set to the optimum values.
(8) The first and second control maps are prepared in advance. The first and second control maps respectively indicate the first and second alteration determination values, each of which are determined based on the engine speed and fuel injection amount. An alteration determination value is read from a control map that is selected in accordance with the engine speed and fuel injection amount. The read alteration determination value is then compared with the offset term. Namely, even if the characteristics of the intake air amount relative to the throttle opening degree are different for each running state of the engine, a control map is selected that corresponds to the engine running state. In addition, the optimum alteration determination value is set regardless of the drive direction of the throttle valve 24.
(9) If the F/B term does not remain less than or equal to the lower limit value of a predetermined range even when the throttle valve 24 is driven by a predetermined amount towards the opening side, then it is determined that the EGR apparatus 32 is abnormal due to a malfunction when the EGR valve 34 is opened. Accordingly, because the cause of the abnormality is specified, processing to resolve the abnormality is simplified.
(10) The continuous time that the F/B term remains greater than or equal to the upper limit value of a predetermined range is measured by a high F/B continuous counter. In addition, the continuous time that the F/B term remains less than or equal to the lower limit value of a predetermined range is measured by a low F/B continuous counter. If the value of each counter exceeds a predetermined value, the throttle opening degree is altered. Therefore, the throttle opening angle is prevented from being altered forcibly if the F/B counter is outside the predetermined range for only a relatively short time.
(11) Because existing sensors 35 to 41 are used for detecting an abnormality in the EGR apparatus 32, there is no need for additional sensors to detect an abnormality.
(12) The change in the F/B term after the alteration of the throttle opening angle is determined using the upper limit value and the lower limit value of the predetermined range before the alteration of the throttle opening angle. Therefore, the abnormality detection routine is simplified compared with when other values are used.

The present invention may be altered in the following ways.
(a) In the preferred embodiment, the first alteration determination value and the second alteration determination value varies in accordance with the engine speed and fuel injection amount. However, at least one of the alteration determination values may be a fixed value.
(b) The abnormality detection apparatus of the present invention may also be used in an engine other than a diesel engine. For example, the abnormality detection apparatus of the present invention may be used in any type of engine provided that the engine is equipped with an EGR apparatus 32 and performs feedback control of the EGR opening degree such that the intake air amount matches a target value.
(c) Instead of the first and second control maps, a predetermined calculation formula may be used to calculate the first and second alteration determination values.
(d) In the preferred embodiment, the EGR apparatus 32 is determined to be abnormal if the F/B term remains outside a predetermined range even when the throttle opening angle is altered. However, the EGR apparatus 32 may be determined to be abnormal if the amount of change of the F/B term is less than or equal to a predetermined value (including cases when the F/B term does not change).

## Claims

1. A detection apparatus for detecting an abnormality in an exhaust gas recirculation apparatus including an exhaust gas recirculation passage (33) that connects an intake passage (19) to an exhaust passage (20) downstream from a throttle valve (24) in order to recirculate exhaust gas of an internal combustion engine (11) to the intake passage, and an exhaust gas recirculation valve (34) for altering a recirculation amount of the exhaust gas flowing through the exhaust gas recirculation passage, the detection apparatus including an intake air amount detection apparatus (35) for detecting an amount of intake air flowing through the intake passage, and a control apparatus (42) for performing feedback control on the exhaust gas recirculation valve such that the intake air amount matches a target intake air amount that corresponds to a running state of the internal combustion engine, the abnormality detection apparatus **characterized in that**:
the control apparatus alters an opening degree of the throttle valve when a feedback term of the feedback control is outside a predetermined range, and after the opening degree of the throttle valve has been altered by a predetermined amount, determines that the exhaust gas recirculation apparatus is abnormal when a change in the feedback term is less than or equal to a predetermined value.

2. The abnormality detection apparatus according to claim 1, **characterized in that** the control apparatus:
reduces the opening degree of the throttle valve by a first predetermined amount when the feedback term is greater than or equal to an upper limit value of the predetermined range;
increases the opening degree of the throttle valve by a second predetermined amount when the feedback term is less than or equal to a lower limit value of the predetermined range;
determines that the exhaust gas recirculation apparatus is abnormal when the opening degree of the throttle valve is equal to or greater than a first alteration determination value and a change in the feedback term is less than or equal to a predetermined value; and
determines that the exhaust gas recirculation apparatus is abnormal when the opening degree of the throttle valve is less than or equal to a second alteration determination value and a change in the feedback term is less than or equal to the predetermined value.

3. The abnormality detection apparatus according to claim 2, **characterized in that** the throttle valve is rotatably supported inside the intake passage, and the second predetermined amount is greater than the first predetermined amount.

4. The abnormality detection according to claim 2, **characterized in that** the throttle valve is rotatably supported inside the intake passage, and at least one of the first alteration determination value and the second alteration determination value varies in accordance with a revolution speed and fuel injection amount of the internal combustion engine.

5. The abnormality detection apparatus according to claim 4, **characterized in that** the control apparatus includes:
a first memory device for storing first alteration determination values, each of which is based on a revolution speed and fuel injection amount of the internal combustion engine;
a first determination value setting device for reading from the first memory device an alteration determination value corresponding to the revolution speed and fuel injection amount of the internal combustion engine and setting this first alteration determination value as the first alteration determination value when the opening degree of the throttle valve is decreased;
a second memory device for storing second alteration determination values, each of which is based on a revolution speed and fuel injection amount of the internal combustion engine; and
a second determination value setting device for reading from the second memory device a second alteration determination value corresponding to the revolution speed and fuel injection amount of the internal combustion engine and setting this second alteration determination value as the second alteration determination value when the opening degree of the throttle valve is increased.

6. The abnormality detection apparatus according to any of claims 1 to 5, **characterized in that** the control apparatus determines that a malfunction has occurred with the exhaust gas recirculation valve in an opened state when the amount of change in the feedback term is less than or equal to a predetermined value after the opening degree of the throttle valve has been increased by the predetermined amount.

7. The abnormality detection apparatus according to any of claims 1 to 6, **characterized in that** the control apparatus measures the continuous time the feedback term is outside the predetermined range and alters the opening angle of the throttle valve when the continuous time is equal to or greater than a predetermined value.

8. The abnormality detection apparatus according to claim 1, **characterized in that** the control apparatus determines that the exhaust gas recirculation apparatus is abnormal when the feedback term is outside the predetermined range after the opening degree of the throttle valve has been altered by a predetermined amount.

9. The abnormality detection apparatus according to claim 1, **characterized in that** the predetermined range is set greater than a range containing the feedback term when the exhaust gas recirculation valve is normal.

10. The abnormality detection apparatus according to claim 1, **characterized in that** the internal combustion engine is a vehicle engine, the exhaust gas recirculation apparatus recirculates the exhaust gas to the intake passage at least when the engine is idling, and the detection apparatus alters an opening degree of the throttle valve at least when the vehicle is traveling normally.

11. A method for detecting an abnormality in an exhaust gas recirculation apparatus including an exhaust gas recirculation passage (33) that connects an intake passage (19) to an exhaust passage (20) downstream from a throttle valve (24) in order to recirculate exhaust gas from an internal combustion engine (11) of a vehicle to the intake passage, and an exhaust gas recirculation valve (34) for altering a recirculation amount of exhaust gas flowing through the exhaust gas recirculation passage, the method being **characterized by**:
detecting an amount of intake air flowing through the intake passage;
feedback controlling the exhaust gas recirculation valve such that the intake air amount matches a target intake air amount that corresponds to a running state of the internal combustion engine;
altering an opening degree of the throttle valve when a feedback term of the feedback control is outside a predetermined range at least when the vehicle is traveling normally; and
determining that the exhaust gas recirculation apparatus is abnormal when a change in the feedback term is less than or equal to a predetermined value after the opening degree of the throttle valve is altered.

12. The method according to claim 11, **characterized in that** the altering of the opening degree of the throttle valve includes decreasing the opening degree of the throttle valve by a first predetermined amount when the feedback term is greater than or equal to an upper limit value of the predetermined range, and increasing the opening degree of the throttle valve by a second predetermined amount if the feedback term is less than or equal to a lower limit value of the predetermined range.

13. The method according to claim 12, wherein the second predetermined value is greater than the first predetermined value.

## Patentansprüche

1. Erfassungsgerät zum Erfassen einer Unregelmäßigkeit in einem Abgasrückführgerät mit einem Abgasrückführdurchgang (33), der einen Einlassdurchgang (19) stromabwärts eines Drosselventils (24) mit einem Abgasdurchgang (20) verbindet, um ein Abgas einer Brennkraftmaschine (11) zu dem Einlassdurchgang rückzuführen, und mit einem Abgasrückführventil (34) zum Verändern einer Rückführmenge des Abgases, das durch den Abgasrückführdurchgang strömt, wobei das Erfassungsgerät ein Einlassluftmengenerfassungsgerät (35) zum Erfassen einer Menge an Einlassluft, die durch den Einlassdurchgang strömt, und ein Steuergerät (42) aufweist, um eine Regelung des Abgasrückführventils derart durchzuführen, dass die Einlassluftmenge mit einer Solleinlassluftmenge übereinstimmt, die einem Betriebszustand der Brennkraftmaschine entspricht, wobei das Unregelmäßigkeiterfassungsgerät **dadurch gekennzeichnet ist, dass**:
das Steuergerät einen Öffnungsgrad des Drosselventils ändert, wenn sich eine Rückführgröße der Regelung außerhalb eines vorbestimmten Bereichs befindet, und dann, nachdem der Öffnungsgrad des Drosselventils um einen vorbestimmten Betrag geändert wurde, bestimmt, dass das Abgasrückführgerät eine Unregelmäßigkeit aufweist, wenn eine Änderung bei der Rückführgröße kleiner als oder gleich wie ein vorbestimmter Wert ist.

2. Unregelmäßigkeitserfassungsgerät gemäß Anspruch 1, **dadurch gekennzeichnet, dass** das Steuergerät:
den Öffnungsgrad des Drosselventils um einen ersten vorbestimmten Betrag reduziert, wenn die Rückführgröße größer als oder gleich wie ein oberer Grenzwert des vorbestimmten Bereichs ist;
den Öffnungsgrad des Drosselventils um einen zweiten vorbestimmten Betrag erhöht, wenn die Rückführgröße kleiner als oder gleich wie ein unterer Grenzwert des vorbestimmten Bereichs ist;
bestimmt, dass das Abgasrückführgerät eine Unregelmäßigkeit aufweist, wenn der Öffnungsgrad des Drosselventils gleich wie oder größer als ein erster Änderungsbestimmungswert ist und eine Änderung der Rückführgröße kleiner als oder gleich wie ein vorbestimmter Wert ist; und
bestimmt, dass das Abgasrückführgerät eine Unregelmäßigkeit aufweist, wenn der Öffnungsgrad des Drosselventils kleiner als oder gleich wie ein zweiter Änderungsbestimmungswert ist und eine Änderung bei der Rückführgröße kleiner als oder gleich wie der vorbestimmte Wert ist.

3. Unregelmäßigkeitserfassungsgerät gemäß Anspruch 2, **dadurch gekennzeichnet, dass** das Drosselventil drehbar innerhalb des Einlassdurchgangs gestützt ist und der zweite vorbestimmte Betrag größer als der erste vorbestimmte Betrag ist.

4. Unregelmäßigkeitserfassungsgerät gemäß Anspruch 2, **dadurch gekennzeichnet, dass** das Drosselventil drehbar innerhalb des Einlassdurchgangs gestützt ist und sich wenigstens einer von dem ersten Änderungsbestimmungswert und dem zweiten Änderungsbestimmungswert in Übereinstimmung mit einer Umdrehungsgeschwindigkeit und einer Kraftstoffeinspritzmenge der Brennkraftmaschine ändert.

5. Unregelmäßigkeitserfassungsgerät gemäß Anspruch 4, **dadurch gekennzeichnet, dass** das Steuergerät Folgendes aufweist:
eine erste Speichervorrichtung zum Speichern erster Änderungsbestimmungswerte, von denen ein jeder auf einer Umdrehungsgeschwindigkeit und einer Kraftstoffeinspritzmenge der Brennkraftmaschine basiert;
eine erste Bestimmungswertfestsetzvorrichtung zum Lesen eines Änderungsbestimmungswerts aus der ersten Speichervorrichtung, der der Umdrehungsgeschwindigkeit und einer Kraftstoffeinspritzmenge der Brennkraftmaschine entspricht, und zum Festsetzen dieses ersten Änderungsbestimmungswerts als den ersten Änderungsbestimmungswert, wenn der Öffnungsgrad des Drosselventils verringert ist;
eine zweite Speichervorrichtung zum Speichern zweiter Änderungsbestimmungswerte, von denen ein jeder auf einer Umdrehungsgeschwindigkeit und einer Kraftstoffeinspritzmenge der Brennkraftmaschine basiert, und
eine zweite Bestimmungswertfestsetzvorrichtung zum Lesen eines zweiten Änderungsbestimmungswerts aus der zweiten Speichervorrichtung, der der Umdrehungsgeschwindigkeit und der Kraftstoffeinspritzmenge der Brennkraftmaschine entspricht, und zum Festsetzen dieses zweiten Änderungsbestimmungswerts als den zweiten Änderungsbestimmungswert, wenn der Öffnungsgrad des Drosselventils vergrößert ist.

6. Unregelmäßigkeitserfassungsgerät gemäß einem der Ansprüche 1 bis 5, **dadurch gekennzeichnet, dass** das Steuergerät bestimmt, dass eine Fehlfunktion bei dem Abgasrückführventil in einem geöffneten Zustand aufgetreten ist, wenn der Änderungsbetrag bei der Rückführgröße kleiner als oder gleich zu einem vorbestimmten Wert ist, nachdem der Öffnungsgrad des Drosselventils um den vorbestimmten Betrag vergrößert wurde.

7. Unregelmäßigkeitserfassungsgerät gemäß einem der Ansprüche 1 bis 6, **dadurch gekennzeichnet, dass** das Steuergerät die fortlaufende Zeit misst, die die Rückführgröße außerhalb des vorbestimmten Bereichs liegt, und den Öffnungswinkel des Drosselventils ändert, wenn die fortlaufende Zeit gleich wie oder größer als ein vorbestimmter Wert ist.

8. Unregelmäßigkeitserfassungsgerät gemäß Anspruch 1, **dadurch gekennzeichnet, dass** das Steuergerät bestimmt, dass das Abgasrückführgerät eine Unregelmäßigkeit aufweist, wenn die Rückführgröße außerhalb des vorbestimmten Bereichs ist, nachdem der Öffnungsgrad des Drosselventils um einen vorbestimmten Betrag geändert wurde.

9. Unregelmäßigkeitserfassungsgerät gemäß Anspruch 1, **dadurch gekennzeichnet, dass** der vorbestimmte Bereich größer als ein Bereich festgesetzt ist, der die Rückführgröße enthält, wenn sich das Abgasrückführventil in einem Normalzustand befindet.

10. Unregelmäßigkeitserfassungsgerät gemäß Anspruch 1, **dadurch gekennzeichnet, dass** die Brennkraftmaschine eine Fahrzeugmaschine ist, dass das Abgasrückführgerät das Abgas zu dem Einlassdurchgang zumindest dann rückführt, wenn sich die Maschine im Leerlauf befindet, und dass das Erfassungsgerät einen Öffnungsgrad des Drosselventils zumindest dann ändert, wenn sich das Fahrzeug normal bewegt.

11. Verfahren zum Erfassen einer Unregelmäßigkeit in einem Abgasrückführgerät, das einen Abgasrückführdurchgang (33), der einen Einlassdurchgang (19) stromabwärts eines Drosselventils (24) mit einem Auslassdurchgang (20) verbindet, um Abgas einer Brennkraftmaschine (11) eines Fahrzeugs zu dem Einlassdurchgang rückzuführen, und ein Abgasrückführventil (34) aufweist, um eine Rückführmenge eines Abgases zu ändern, das durch den Abgasrückführdurchgang strömt, wobei das Verfahren durch die folgenden Schritte **gekennzeichnet** ist:
Erfassen einer Menge einer Einlassluft, die durch den Einlassdurchgang strömt;
Regeln des Abgasrückführventils derart, dass die Einlassluftmenge mit einer Solleinlassluftmenge übereinstimmt, die einem Betriebszustand der Brennkraftmaschine entspricht;
Ändern eines Öffnungsgrads des Drosselventils, wenn eine Rückführgröße der Regelung außerhalb eines vorbestimmten Bereichs liegt, wenigstens dann, wenn sich das Fahrzeug normal bewegt; und
Bestimmen, dass das Abgasrückführgerät eine Unregelmäßigkeit aufweist, wenn eine Änderung bei der Rückführgröße kleiner als oder gleich wie ein vorbestimmter Wert ist, nachdem der Öffnungsgrad des Drosselventils geändert wurde.

12. Verfahren gemäß Anspruch 11, **dadurch gekennzeichnet, dass** das Ändern des Öffnungsgrads des Drosselventils ein Verringern des Öffnungsgrads des Drosselventils um einen ersten vorbestimmten Betrag, wenn die Rückführgröße größer als oder gleich wie ein oberer Grenzwert des vorbestimmten Bereichs ist, und ein Erhöhen des Öffnungsgrads des Drosselventils um einen zweiten vorbestimmten Betrag umfasst, wenn die Rückführgröße kleiner als oder gleich wie ein unterer Grenzwert des vorbestimmten Bereichs ist.

13. Verfahren gemäß Anspruch 12, wobei der zweite vorbestimmte Wert größer als der erste vorbestimmte Wert ist.

## Revendications

1. Appareil de détection pour détecter une anomalie dans un appareil de recirculation de gaz d'échappement incluant un passage de recirculation de gaz d'échappement (33) qui relie un passage d'admission (19) à un passage d'échappement (20) en aval d'une soupape d'étranglement (24) afin de faire recirculer un gaz d'échappement d'un moteur à combustion interne (11) au passage d'admission, et une soupape de recirculation de gaz d'échappement (34) pour modifier une quantité de recirculation du gaz d'échappement s'écoulant à travers le passage de recirculation de gaz d'échappement, l'appareil de détection incluant un appareil de détection d'une quantité d'air d'admission (35) pour détecter une quantité d'air d'admission s'écoulant à travers le passage d'admission, et un appareil de commande (42) pour exécuter une commande à rétroaction sur la soupape de recirculation de gaz d'échappement de sorte que la quantité d'air d'admission coïncide avec une quantité d'air d'admission cible qui correspond à un état de marche du moteur à combustion interne, l'appareil de détection d'anomalie **caractérisé en ce que**:
l'appareil de commande modifie un degré d'ouverture de la soupape d'étranglement lorsqu'un terme de rétroaction de la commande à rétroaction se trouve en dehors d'une gamme prédéterminée, et après modification du degré d'ouverture de la soupape d'étranglement par une quantité prédéterminée, détermine que l'appareil de recirculation de gaz d'échappement est anormal lorsqu'un changement dans le terme de rétroaction est inférieur ou égal à une valeur prédéterminée.

2. Appareil de détection d'anomalie selon la revendication 1, **caractérisé en ce que** l'appareil de commande:
réduit le degré d'ouverture de la soupape d'étranglement par une première quantité prédéterminée lorsque le terme de rétroaction est supérieur ou égal à une valeur limite supérieure de la gamme prédéterminée;
augmente le degré d'ouverture de la soupape d'étranglement par une deuxième quantité prédéterminée lorsque le terme de rétroaction est inférieur ou égal à une valeur limite inférieure de la gamme prédéterminée;
détermine que l'appareil de recirculation de gaz d'échappement est anormal lorsque le degré d'ouverture de la soupape d'étranglement est supérieur ou égal à une première valeur de détermination de modification et qu'un changement dans le terme de rétroaction est inférieur ou égal à une valeur prédéterminée; et
détermine que l'appareil de recirculation de gaz d'échappement est anormal lorsque le degré d'ouverture de la soupape d'étranglement est inférieur ou égal à une deuxième valeur de détermination de modification et qu'un changement dans le terme de rétroaction est inférieur ou égal à la valeur prédéterminée.

3. Appareil de détection d'anomalie selon la revendication 2, **caractérisé en ce que** la soupape d'étranglement est soutenue en rotation à l'intérieur du passage d'admission, et la deuxième quantité prédéterminée est supérieure à la première quantité prédéterminée.

4. Appareil de détection d'anomalie selon la revendication 2, **caractérisé en ce que** la soupape d'étranglement est soutenue en rotation à l'intérieur du passage d'admission, et au moins l'une de la première valeur de détermination de modification et de la deuxième valeur de détermination de modification varie en accord avec une vitesse de révolution et une quantité d'injection de carburant du moteur à combustion interne.

5. Appareil de détection d'anomalie selon la revendication 4, **caractérisé en ce que** l'appareil de commande comporte:
un premier dispositif de mémoire pour stocker des premières valeurs de détermination de modification, chacune desquelles est basée sur une vitesse de révolution et une quantité d'injection de carburant du moteur à combustion interne;
un premier dispositif d'établissement de valeur de détermination pour lire depuis le premier dispositif de mémoire une valeur de détermination de modification correspondant à la vitesse de révolution et à la quantité d'injection de carburant du moteur à combustion interne et établir cette première valeur de détermination de modification comme étant la première valeur de détermination de modification lorsque le degré d'ouverture de la soupape d'étranglement est réduit;
un deuxième dispositif de mémoire pour stocker des deuxièmes valeurs de détermination de modification, chacune desquelles est basée sur une vitesse de révolution et une quantité d'injection de carburant du moteur à combustion interne; et
un deuxième dispositif d'établissement de valeur de détermination pour lire depuis le deuxième dispositif de mémoire une deuxième valeur de détermination de modification correspondant à la vitesse de révolution et à la quantité d'injection de carburant du moteur à combustion interne et établir cette deuxième valeur de détermination de modification comme étant la deuxième valeur de détermination de modification lorsque le degré d'ouverture de la soupape d'étranglement est augmenté.

6. Appareil de détection d'anomalie selon l'une quelconque des revendications 1 à 5, **caractérisé en ce que** l'appareil de commande détermine qu'un dysfonctionnement s'est produit avec la soupape de recirculation de gaz d'échappement dans un état ouvert lorsque la quantité de changement dans le terme de rétroaction est inférieure ou égale à une valeur prédéterminée après augmentation du degré d'ouverture de la soupape d'étranglement par la quantité prédéterminée.

7. Appareil de détection d'anomalie selon l'une quelconque des revendications 1 à 6, **caractérisé en ce que** l'appareil de commande mesure le temps continu pendant lequel le terme de rétroaction se trouve en dehors de la gamme prédéterminée et modifie l'angle d'ouverture de la soupape d'étranglement lorsque le temps continu est supérieur ou égal à une valeur prédéterminée.

8. Appareil de détection d'anomalie selon la revendication 1, **caractérisé en ce que** l'appareil de commande détermine que l'appareil de recirculation de gaz d'échappement est anormal lorsque le terme de rétroaction se trouve en dehors de la gamme prédéterminée après modification du degré d'ouverture de la soupape d'étranglement par une quantité prédéterminée.

9. Appareil de détection d'anomalie selon la revendication 1, **caractérisé en ce que** la gamme prédéterminée est établie de sorte à être supérieure à une gamme contenant le terme de rétroaction lorsque la soupape de recirculation de gaz d'échappement est normale.

10. Appareil de détection d'anomalie selon la revendication 1, **caractérisé en ce que** le moteur à combustion interne est un moteur pour véhicule, l'appareil de recirculation de gaz d'échappement fait recirculer le gaz d'échappement au passage d'admission au moins lorsque le moteur est dans un état de ralenti, et l'appareil de détection modifie un degré d'ouverture de la soupape d'étranglement au moins lorsque le véhicule se déplace normalement.

11. Procédé pour détecter une anomalie dans un appareil de recirculation de gaz d'échappement comportant un passage de recirculation de gaz d'échappement (33) qui relie un passage d'admission (19) à un passage d'échappement (20) en aval d'une soupape d'étranglement (24) afin de faire recirculer un gaz d'échappement depuis un moteur à combustion interne (11) d'un véhicule au passage d'admission, et une soupape de recirculation de gaz d'échappement (34) pour modifier une quantité de recirculation de gaz d'échappement s'écoulant à travers le passage de recirculation de gaz d'échappement, le procédé étant **caractérisé par**:
détecter une quantité d'air d'admission s'écoulant à travers le passage d'admission;
commander par rétroaction la soupape de recirculation de gaz d'échappement de sorte que la quantité d'air d'admission coïncide avec une quantité d'air d'admission cible qui correspond à un état de marche du moteur à combustion interne;
modifier un degré d'ouverture de la soupape d'étranglement lorsqu'un terme de rétroaction de la commande à rétroaction se trouve en dehors d'une gamme prédéterminée au moins lorsque le véhicule se déplace normalement; et
déterminer que l'appareil de recirculation de gaz d'échappement est anormal lorsqu'un changement dans le terme de rétroaction est inférieur ou égal à une valeur prédéterminée après modification du degré d'ouverture de la soupape d'étranglement.

12. Procédé selon la revendication 11, **caractérisé en ce que** la modification du degré d'ouverture de la soupape d'étranglement comporte la diminution du degré d'ouverture de la soupape d'étranglement par une première quantité prédéterminée lorsque le terme de rétroaction est supérieur ou égal à une valeur limite supérieure de la gamme prédéterminée, et l'augmentation du degré d'ouverture de la soupape d'étranglement par une deuxième quantité prédéterminée si le terme de rétroaction est inférieur ou égal à une valeur limite inférieure de la gamme prédéterminée.

13. Procédé selon la revendication 12, dans lequel la deuxième valeur prédéterminée est supérieure à la première valeur prédéterminée.
